# EUROPÄISCHE PATENTSCHRIFT

(11) **EP 2 739 663 B1**
(45) Veröffentlichungstag und Bekanntmachung des Hinweises auf die Patenterteilung: **29.07.2020**
(21) Anmeldenummer: 12724961.3
(22) Anmeldetag: 29.05.2012
(51) Int. Cl.: C08K 5/01, C08G 18/10, C08K 5/521, C08G 18/48, C08G 18/12, C08G 18/74, C08K 5/00, C08G 18/42, C08G 18/40, C08G 18/76

(54) **MONOMERARME POLYURETHANSCHÄUME**
LOW-MONOMER POLYURETHANE FOAMS
MOUSSES POLYURÉTHANE PAUVRES EN MONOMÈRES

(30) Priorität: 05.08.2011 DE 102011080513
(43) Veröffentlichungstag der Anmeldung: 11.06.2014
(73) Patentinhaber: Henkel AG & Co. KGaA, 40589 Düsseldorf (DE)
(72) Erfinder: KINZELMANN, Hans-Georg, 50259 Pulheim (DE); FRANKEN, Uwe, 41542 Dormagen (DE); LOHR, Christoph, 40822 Mettmann (DE)
(86) Internationale Anmeldenummer: PCT/EP2012/059983
(87) Internationale Veröffentlichungsnummer: WO 2013/020730

(56) Entgegenhaltungen:
- EP-A2- 0 150 444
- EP-A2- 2 159 240
- WO-A1-02/079291
- DE-A1-102005 059 710
- DE-A1-102009 045 027
- US-A- 5 925 781

## Beschreibung

Die Erfindung betrifft monomerarme Ein-Komponenten-Polyurethanschäume. Dabei werden lagerstabile vernetzbare Schaumvorläufer bereitgestellt, die eine hohe Reaktivität aufweisen und bei der Anwendung eine gute Ausbildung des Schaummaterials ergeben.

Einkomponenten PUR Schäume werden hauptsächlich für das Dichten und Dämmen von Fugen im Bau- und Heimwerkerbereich eingesetzt. Bei solchen Anwendungen wird das Schaum-Produkt aus einer Aerosoldose appliziert und zum Beispiel zum Einbau von Tür- und Fensterrahmen in Gebäuden verwendet. Um die Fugen zwischen Rahmen und Wand auszuschäumen, ist es notwendig, dass die anfängliche Viskosität des Schaums niedrig genug ist, um eine ausreichende Expansion des Schaums in der Fuge sicherzustellen. Der Einkomponenten- PUR Schaum wird durch die Vernetzungsreaktionen mit Feuchtigkeit fest.

Moderne PUR Schaumzusammensetzungen umfassen normalerweise ein Prepolymer, das aus einer Isocyanat- und einer Polyolkomponente gebildet wird. Ein hoher Gehalt an monomeren Diisocyanaten ist notwendig gewesen, um einen Polyurethanschaum mit ausreichender Festigkeit und niedriger Viskosität zu erzeugen. Die niedrigere Viskosität ermöglicht eine gute Schäumbarkeit und Füllbarkeit der Fuge, sowie ein gutes Dosieren aus der Dose bei Normaltemperatur. Außerdem trägt das monomere Diisocyanat bei herkömmlichen Schäumen auch bedeutend zur Reaktionsfähigkeit des Schaums bei. Deshalb haben Einkomponentenschäume bis heute einen bedeutenden Gehalt an monomeren Diisocyanaten.

Das verursacht Probleme bei der Verarbeitung in der Weise, dass während des Ausbringens (Ausschäumens) des Inhaltes aus der Aerosoldose flüchtige monomere Diisocyanate in die Arbeitsatmosphäre abgegeben werden. Das ist im Hinblick auf die gesundheitsschädliche Wirkung der monomeren Isocyanate zu vermeiden. Dadurch ergeben sich Einschränkungen in der Anwendung nicht monomerarmer PU-Schäume.

In der WO 2002/079291 werden Klebstoffpolymere beschrieben, die ein Prepolymer aus einer Isocyanatkomponente umgesetzt mit einem Polyol und eine niedrigviskosen nicht mit Isocyanaten und OH-Gruppen reaktiven Komponente enthalten. Dabei sollen die monomeren Diisocyanate in der Zusammensetzung weniger als 2 % betragen. Als nicht-reaktive niedrigviskose Komponente werden Phosphatsäureester, Adipinsäureester oder Phthalsäureester beschrieben. Dabei wird diese Mischung von nicht umgesetzten monomeren Isocyanaten befreit.

In der WO 2005/054324 werden Prepolymerzusammensetzungen beschrieben zur Erzeugung von PU-Schäumen, wobei Polyisocyanate und Polyole enthalten sein können. Das Prepolymer wird durch Reaktion eines asymmetrischen Polyisocyanats mit sterisch gehinderten Polyolen mit wenigstens zwei OH-Funktionen erhalten. Eine nähere Beschreibung der Polyole führt aus, dass insbesondere sterisch gehinderte Polyethylenglykole mit Propylenoxidendgruppen oder Polypropylenglykole eingesetzt werden können oder dass zusätzlich niedermolekulare Diole mit sekundären oder tertiären OH-Gruppen eingesetzt werden. Als Beispiel werden Umsetzungsprodukte mit 2,4'- MDI beschrieben. Ein Prepolymer mit unterschiedlich reaktiven NCO-Gruppen wird nicht beschrieben.

DE 10 2009 045027 betrifft eine vernetzbare schäumbare Zusammensetzung mit niedrigem Gehalt an monomeren Isocyanaten enthaltend a) 10 bis 90 Gew.-% eines Prepolymeren aus Polyesterdiolen umgesetzt mit einem Überschuss an Diisocyanaten und nachfolgender Entfernung des überschüssigen monomeren Diisocyanats, b) 90 bis 10 Gew.-% einer Komponente auf Basis von Polyertherpolyolen, die entweder mindestens eine Si(OR)₃-Gruppe oder mindestens eine NCO-Gruppe aufweist, c) 0,1 bis 30 Gew.-% Additive, d) mindestens ein Treibmittel, wobei die Polyesterdiole und die Polyetherdiole eine Molmasse (M_{N}) unter 5000 g/mol aufweisen und die Mischung aus a und b einen Gehalt an monomeren Diisocyanaten unter 2 Gew.-% enthält.

Es ist bekannt, dass aus PU-Prepolymeren basierend auf Polyetherpolyolen Schäume hergestellt werden können. Diese weisen gute Eigenschaften auf. Werden diese monomerarm eingestellt, ist die Viskosität jedoch so hoch, dass diese Produkte häufig nur mit weiteren verdünnenden Substanzen, wie Weichmachern oder Lösemitteln eingesetzt werden können. Weichmacher oder Lösemittel sind nachteilig für die Gesundheit bei der Verarbeitung. Weiterhin können sie aus dem vernetzten Schaum diffundieren, so dass die Eigenschaften des vernetzten Produkts negativ beeinflusst werden.

Auch Polyesterpolyolprepolymere können in Schaummaterialien eingesetzt werden. Dabei zeigt sich ebenso, dass in diesen Fällen die Vormaterialien eine hohe Viskosität haben. Dieser Effekt wird besonders bei monomerarmen Prepolymeren verstärkt. Diese sind deshalb kaum als monomerarme Komponente in Schäumen einzusetzen. Außerdem hat sich gezeigt, dass PU-Schäume mit nur geringen Anteilen an Isocyanatgruppen oder monomeren Isocyanaten keine ausreichende mechanische Festigkeit als vernetzter Schaum aufweisen.

Prepolymere mit hohen Monomeranteil haben gute Eigenschaften, sind aber eingeschränkt durch die Arbeitssicherheitsanforderungen aufgrund der monomeren Diisocyanate. Destillationsschritte zur Reduktion der monomeren Isocyanate bei der Herstellung von Prepolymeren ergeben gute Ergebnisse, sind aber technisch aufwendig. TDI und seine Isomere haben einen hohen Dampfdruck, sodass die Restmonomeren noch deutlich weiter abgesenkt werden müssen. Fest asymmetrische aromatische Isocyanate sind teuer und in größeren Mengen schlecht verfügbar. Außerdem sind die weniger reaktiven NCO-Gruppen langsamer in der Reaktion, sodass zur vollständigen Prepolymersynthese mit solchen NCO-Gruppen erhöhte äußere Bedingungen angelegt werden müssen. Dabei treten aber auch mehr Nebenreaktionen auf, das führt zu einer Verschlechterung des Viskositätsverhaltens. Auch im Prepolymer sind dann überwiegend weniger reaktive Gruppen enthalten.

Aufgabe der vorliegenden Erfindung ist es daher schnell reagierende, monomerarme PU-Prepolymere bereitzustellen, die über NCO-Gruppen vernetzen können, die wenig Lösemittel oder Weichmacher enthalten. Dabei soll eine geeignete niedrige Viskosität erhalten werden, um als Schaumvorläufer in reaktiven vernetzenden PU-Schäumen eingesetzt zu werden. Weiterhin soll eine Verfahrensführung ermöglicht werden, die auf Destillationsschritte bei der Prepolymerherstellung verzichten kann.

Die Aufgabe wird gelöst durch eine vernetzbare Zusammensetzung wie in den Ansprüchen definiert.

Ein notwendiger Bestandteil der erfindungsgemäßen Zusammensetzung sind Prepolymere auf Basis von Polyestern und/oder Polyethern (a). Diese sind durch Reaktion von Polyesterpolyolen und/oder Polyetherpolyolen mit Diisocyanaten herstellbar. Geeignete Polyesterpolyole sind Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Es können die zur Herstellung von Polyestern an sich bekannten Polyole und Carbonsäuren ausgewählt werden. Beispielsweise zur Herstellung derartiger Polyesterpolyole geeignete Diole sind Ethylenglykol, 1,2 oder 1,3- Propandiol, 1,2-oder 1,4-Butandiol, Pentandiol, die isomeren Hexandiole, Octandiol, 1,4-Hydroxymethyl-cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol oder Polybutylenglykol. Es können auch aromatische Diole eingesetzt werden.

Die eingesetzten Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Gemische aus zwei oder mehr davon geeignet. Als Tricarbonsäuren, die gegebenenfalls anteilig enthalten sein können sind beispielsweise Zitronensäure oder Trimellithsäure geeignet. Alle genannten Säuren können einzeln oder als Gemische aus zwei oder mehr davon eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Weitere geeignete Polyesterpole sind Polycarbonat-Polyole. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder mit Phosgen, erhalten werden. Eine weitere Gruppe der erfindungsgemäß einzusetzenden Polyole sind Polylactone, beispielsweise Polyester auf der Basis von ε-Caprolacton. Auch Polyesterpolyole sind geeignet, die in der Molekülkette eine oder mehrere Urethangruppen enthalten.

Polyesterpolyole weisen bevorzugt ein Molmasse von ca. 200 bis 5 000 g/mol auf, insbesondere unter 2000 g/mol (zahlenmittlere Molmasse, M_{N}, gemessen durch GPC). Insbesondere sind auch Polyesterpolyole geeignet, die aromatische Strukturen enthalten, beispielsweise durch Phenyl- oder Naphthylgruppen.

Geeignete Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxydiphenylpropan, Bisphenol A, Bisphenol F, Brenzkatechin, Resorcin, Hydrochinon oder Gemischen aus zwei oder mehr davon. Ferner können auch die Umsetzungsprodukte polyfunktioneller Alkohole, wie Glycerin, Trimethylol-ethan oder Trimethylolpropan, Pentaerythrit oder Zuckeralkohole mit den Alkylenoxiden geeignet sein. Weitere, im Rahmen der Erfindung geeignete Polyole, entstehen durch Polymerisation von Tetrahydrofuran (Poly-THF).

Es sollen erfindungsgemäß fließfähige Polyetherpolyole ausgesucht werden, beispielsweise sind Polyetherpolyole mit einer Molmasse von 150 bis 5 000 g/mol, insbesondere bis 3 000, vorzugsweise 200 bis 2000 g/mol geeignet. Insbesondere sind Diole geeignet, wie Homopolymere des Polyethylenglykols, Propylenglykols, Block- oder statistische Copolymere aus Ethylenglykol und Propylenglykol, insbesondere solche, die sekundäre Hydroxylgruppen enthalten

Geeignete Polyetherpolyole oder Polyesterpolyole sind dem Fachmann bekannt und kommerziell erhältlich. Insbesondere geeignet sind drei oder insbesondere zwei endständige OH-Gruppen aufweisende Polyole als Mischungen, bevorzugt mit einer mittleren Funktionalität unter 2,5, insbesondere Diole. Bevorzugt soll der Polyetherpolyolanteil mehr als 65 % betragen, eine andere Ausführungsform enthält ausschließlich Polyetherpolyolen.

Als Isocyanate zur Herstellung der NCO-haltigen Prepolymere sind die bekannten aromatischen monomeren Diisocyanate bekannt. Diese haben eine Molmasse unter 500g/mol. Anteilig können als asymmetrische Diisocyanate beispielsweise Xylylendiisocyanat (XDI), Tetramethylxylylendiisocyanat (TMXDI), 1,3- Phenylendiisocyanat eingesetzt werden. Als symmetrische aromatische Diisocyanate sind Naphthalin-1,5-diisocyanat (NDI) oder 1,4- Phenylendiisocyanat anteilig möglich. Bevorzugt werden in Reaktionsstufe i) als asymmetrische Isocyanate 2,4-Toluylendiisocyanat (TDI), Isomerengemische des TDI oder 2,4'-Diphenylmethandiisocyanat (MDI) eingesetzt, in Reaktionsstufe ii) sollen insbesondere symmetrische Isocyanate, wie 2,2'-Diphenylmethandiisocyanat oder 4,4'-Diphenylmethandiisocyanat sowie deren Isomerengemische eingesetzt werden.

Gemäß der vorliegenden Erfindung werden die Polyole mit einem Unterschuss an schnell reagierenden NCO-Gruppen des asymmetrischen Diisocyanats umgesetzt. Die Reaktion der monomeren Diisocyanate mit den Polyolen erfolgt bei einer Temperatur zwischen 20°C bis 100°C, bevorzugt zwischen 25 bis 80°C und insbesondere bevorzugt zwischen 40 bis 75°C. Die Mengen werden so gewählt, dass ein Prepolymer erhalten wird, das NCO-Gruppen und freie OH-Gruppen aufweist. Ebenso ist es möglich vor Ende der Reaktionsstufe i) die Reaktion ii) einzuleiten, sodass die Anzahl der freien OH-Gruppen erhöht wird.

Die Menge des asymmetrischen Diisocyanats (A) wird so gewählt, dass ein NCO/OH-Verhältnis von 0,5:1 bis 2:1 eingesetzt wird. In einer weiteren Stufe der Reaktion wird dem Umsetzungsprodukt 4,4'-MDI als symmetrisches Diisocyanat (S) zugesetzt. Die Menge des MDI wird so gewählt, dass ein NCO(S)/OH (frei)-Verhältnis von 1:1 bis ca. 2,7:1 erreicht wird, insbesondere bis 2,1:1. Bevorzugt werden erfindungsgemäß also Prepolymere erhalten, die im Durchschnitt mindestens endständig eine TDI-Gruppe aufweisen und gegebenenfalls endständig eine MDI-Gruppe.

Die Polyether/Polyesterprepolymere haben als Mischung im monomerarmen Zustand eine Viskosität von 10000 bis 150000 mPas bei 50°C (gemessen nach Brookfield, EN ISO 2555). Der Monomergehalt an nicht umgesetzten Monomeren soll unter 2 Gew.-% MDI betragen, bevorzugt unter 1,0 %. Die Menge an monomerem TDI soll unter 0,1 Gew-% betragen, insbesondere unter 0,05%. Dabei sollen die Prepolymere einen NCO-Gehalt von 4 bis 8 Gew-% aufweisen. Ganz besonders bevorzugt werden Prepolymere eingesetzt, die nur einen geringen Molekulargewichtsaufbau bei der Herstellung ergeben haben.

Weiterhin kann die erfindungsgemäße Zusammensetzung als Schaumvorläufer auch für die Schaumherstellung bekannte Additive enthalten. Es kann sich dabei beispielsweise um Weichmacher, Stabilisatoren, Haftvermittler, Katalysatoren, Flammschutzmittel, Biozide, Zellöffner und ähnliche Zusatzstoffe handeln. Dabei ist es zweckmäßig den Anteil von nicht im Polymer anreagierten Bestandteilen, wie Weichmacher oder Lösemitteln möglichst gering zu halten.

Weichmacher können in dem Schaumvorläufer bis zu 40 Gew.-% enthalten sein, insbesondere auch keine Weichmacher oder zwischen 0,5 und 20 Gew.-% bezogen auf die Gesamtzusammensetzung der nicht flüchtigen Bestandteile. Es werden Weichmacher mit polaren Gruppen bevorzugt. Geeignete Weichmacher sind dem Fachmann bekannt und kommerziell erhältlich.

Stabilisatoren im Sinne dieser Erfindung sind Antioxidantien, UV-Stabilisatoren, Hydrolyse-Stabilisatoren oder Schaumstabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate oder sterisch gehinderte Phenole zugegeben werden. Beispiele für Schaumstabilisatoren sind Polyethersiloxane, wie Copolymerisate aus Ethylenoxid und Propylenoxid verbunden mit einem Polydimethylsiloxanrest, über Allophanatgruppen verzweigte Polysiloxan-Polyoxyalkylen-Copolymere, andere Organospolysiloxane, wie Dimethylpolysiloxane; oxyethylierte Alkylphenole, oxyethylierte Fettalkohole, und/oder Paraffinöle. Zur Verbesserung der Emulgierwirkung, der Zellstruktur und/oder zu deren Stabilisierung eignen sich ferner oligomere Polyacrylate mit Polyoxyalkylen- und Fluoralkanresten als Seitengruppen. Die erfindungsgemäßen schäumbaren Mischungen können Schaumstablisatoren z.B. in Mengenbereichen zwischen 0,1 und 5 Gew-% enthalten, bezogen auf die Mischung, der nicht flüchtigen Anteile.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet. Die Mengen können von 0 bis 10 Gew-% betragen, vorzugsweise zwischen 0 und 5 Gew-%, bezogen auf die Mischung.

Es können auch Katalysatoren enthalten sein. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Zinnoctoat; Zinnoxide wie Dibutylzinnoxid, und Dioctylzinnoxid; Organoaluminumverbindungen wie Aluminumtrisacetylacetonat, Aluminumtrisethylacetoacetat; Chelatverbindungen wie Titantetraacetylacetonat; Aminverbindungen wie Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), 1,4-Diazabicyclo[2,2,2]octan, N,N-Dimethylpiperazin, 1,8-Diazabicyclo[5.4.0]undec-7-en, Dimorpholinodimethylether, Dimorpholinodiethylether (DMDEE) oder deren Mischungen. Der Katalysator, bevorzugt Mischungen mehrerer Katalysatoren, werden in einer Menge von 0,01 bis etwa 5 Gew.-% bezogen auf das Gesamtgewicht der Zubereitung eingesetzt.

In einer anderen Ausführungsform enthält eine erfindungsgemäße schäumbare Mischung mindestens ein flüssiges Flammschutzmittel. Das Flammschutzmittel kann ausgewählt werden aus der Gruppe halogenierte (insbesondere bromierte) Ether vom Typ "Ixol" der Fa. Solvay, 3,4,5,6-tetrabromo-, 2-(2-hydroxyethoxy) ethyl-2-hydroxypropyl ester), organische Phosphate, insbesondere Diethylethanphosphonat, Triethylphosphat, Dimethylpropylphosphonat, Diphenylkresylphosphat, sowie chlorierte Phosphate, insbesondere Tris-(2-chlorethyl)phosphat, Tris-(2-chlorisopropyl)phosphat, Tris(1,3-dichlorisopropyl)phosphat, Tris-(2,3-dibrompropyl)phosphat und Tetrakis-(2-chlorethyl)-ethylendiphosphat oder deren Mischungen. Vorzugsweise enthält die Mischung das Flammschutzmittel in einer Menge von 1 bis 50 Gew.-%, besonders bevorzugt von 5 bis 20 Gew.-%, bezogen auf das Gesamtgewicht der Mischung. Es ist zweckmäßig aus den vorgenannten Flammschutzmitteln diejenigen auszuwählen, die keine Hydroxylgruppen aufweisen, da diese den Gehalt an reaktiven NCO-Gruppen vermindern.

Eine erfindungsgemäße schäumbare Zusammensetzung enthält neben dem Gemisch der Prepolymer mindestens ein Treibmittel. Als Treibmittel können prinzipiell eine Vielzahl leichtflüchtiger Kohlenwasserstoffe eingesetzt werden. Besonders bevorzugte Treibmittel werden ausgewählt aus Kohlenwasserstoffen und/oder Fluorkohlenwasserstoffen mit jeweils 1-5 Kohlenstoffatomen und/oder Dimethylether (DME) sowie deren Mischungen, beispielsweise aus DME / Propan / Isobutan / nButan.

In der Ausführungsform ist es zweckmäßig, dass mindestens anteilsweise polare Treibmittel enthalten sind. Gegebenenfalls können zusätzlich unpolare Treibmittel eingesetzt werden. Als unpolare Treibmittel werden die bekannten leichflüchtigen Kohlenwasserstoffe verstanden, die 1 bis 5 Kohlenstoffatome aufweisen. Als polare Treibmittel werden solche Substanzen verstanden, die bei 20°C einen erheblichen Dampfdruck aufweisen und eine Polarität zeigen. Es handelt sich dabei um Verbindungen, die zusätzlich zu Kohlenwasserstoffeinheiten weitere Heteroatome aufweisen, insbesondere Sauerstoff, Fluor oder Chlor.

Die Treibmittel werden beispielsweise in Mengen von 5 bis 40 Gew.%, vorzugsweise von 10 bis 30 Gew.%, bezogen auf die gesamte schäumbare Mischung eingesetzt. Insbesondere soll ein hoher Anteil an polaren Treibmitteln eingesetzt werden, beispielsweise sollen mehr als 25 % (bezogen auf die Menge aller Treibmittel) polare Treibmittel enthalten sein, insbesondere mehr als 50 %. erfindungsgemäß werden DME und/oder Dimethoxymethan als polares Treibmittel verwendet.

Die erfindungsgemäße Schaumvorläufermischung enthält 0 bis 35 Gew-% eines Polyesterprepolymeren mit NCO-Gruppen, 99,5 bis 30 Gew.-%, insbesondere 99,5 bis 65 Gew.-% Polyoxyalkylenprepolymere mit NCO-Gruppen, 0,5 bis 30 Gew-% Hilfsstoffe und Additive, insbesondere Katalysatoren, Flammschutzmittel und/oder Stabilisatoren. Die Gesamtheit dieser Bestandteile soll 100 Gew-% betragen. Zusätzlich enthält die erfindungsgemäße Mischung noch inerte Treibmittel.

Ein weiterer Gegenstand der vorliegenden Erfindung ist ein Einweg-Druckbehälter enthaltend eine erfindungsgemäße schäumbare Mischung. Der Einweg-Druckbehälter (Aerosol-Dose) enthält also mindestens ein Prepolymer oder eine Mischung und mindestens ein Treibmittel. Um eine gute Verarbeitbarkeit der Mischung - insbesondere das Befüllen der Behälter - zu ermöglichen, beträgt die Viskosität der Mischung aller nicht flüchtige Bestandteile (ohne Treibmittel) erfindungsgemäß 10000 bis 150000 mPas (gemessen bei 50°C).

Die erfindungsgemäßen schäumbaren Mischungen härten nach dem Ausbringen aus der Aerosoldose durch Reaktion mit der umgebenden Luftfeuchtigkeit zu feinzelligen Schäumen aus, so dass die schäumbaren Mischungen zum Dichten, Dämmen und/oder Montieren, z.B. von Fugen, Dachflächen, Fenstern und Türen oder zum Ausfüllen von Hohlräumen geeignet sind.

Ein weiterer Gegenstand der vorliegenden Erfindung ist daher auch die Verwendung einer erfindungsgemäßen schäumbaren Mischung oder einer nach einem erfindungsgemäßen Verfahren hergestellten Mischung zum Dichten, Dämmen und/oder Montieren von Fugen, Dachflächen, Fenstern und Türen oder zum Ausfüllen von Hohlräumen.

Ein weiterer Gegenstand der Erfindung ist ein Verfahren zum Herstellen von schäumbaren, vernetzbaren Zusammensetzungen. Gemäß diesem Verfahren wird ein Zwischenprodukt aus mindestens einem Polyetherdiol und /oder Polyesterdiol mit TDI hergestellt. Dabei soll die Menge ein Verhältnis NCO(A):OH von 2:1 bis 1: 1 umfassen. Es wird ein Zwischenprodukt erhalten, das OH-Gruppen und NCO-Gruppen aufweist. Dieses wird dann an den noch vorhandenen OH-Gruppen unmittelbar mit einem symmetrischen aromatischen Diisocyanat (S) umgesetzt. Die Menge wird so gewählt, dass ein NCO(S):OH-Verhältnis von 1:1 bis 2,7:1 erhalten wird. Es werden so Prepolymere erhalten, die beispielsweise reaktive NCO-Gruppen auf Basis von TDI und ggf. MDI enthalten. Durch die Verfahrensführung wird ein geringer Gehalt an monomeren freien Isocyanaten erhalten.

Zu einem Prepolymeren auf Basis Polyether kann ein weiteres vernetzbares Prepolymer auf Basis von Polyesterpolyolen gegeben werden. Ebenso können auch Gemische der Polyole gemeinsam umgesetzt werden. Nach der Reaktion können gegebenenfalls Additive zugemischt werden, die in einer erfindungsgemäßen Zusammensetzung enthalten sein können. Weiterhin wird zu dieser Mischung mindestens ein Treibgas zugesetzt. Das kann durch Mischen der Prepolymer/Additivmischung mit Treibgas geschehen, wobei diese Mischung dann in die entsprechenden Einweg-Druckgebinde abgefüllt wird. Es ist ebenso möglich, die verschiedenen Prepolymere und Additive einzeln in den entsprechenden Behälter zu geben und die Treibgase danach zuzusetzen. Auf bekannte Art und Weise werden die Komponenten miteinander vermischt. Das Mischen der Komponenten kann auch durch Erwärmen unterstützt werden, so dass die Verarbeitungsprozesse schneller ablaufen. Es werden schäumbare Mischungen abgefüllt in Einweg-Druck-Behältern erhalten. Diese sind über einen Zeitraum von mindestens 6 Monate lagerstabil, soweit unter wasserfreien Bedingungen gearbeitet wird.

Die erfindungsgemäßen schäumbaren Zusammensetzungen sind insbesondere zur Verwendung als 1K-Dosenschaum einzusetzen. Diese werden üblicherweise als Ortsschaum bezeichnet, d.h. sie werden zur Herstellung und Lagerung und Transport in Aerosoldosen gefüllt und unmittelbar bei der Anwendung ausgetragen und aufgeschäumt. Durch die erfindungsgemäße Zusammensetzung ist es möglich, Isocyanat-reaktive Polyurethanschäume herzustellen, die einen geringen Monomergehalt aufweisen. Diese weisen eine Zusammensetzung auf, die eine ausreichende Viskosität zeigt, um mit den bekannten Treibmitteln verschäumbar zu sein.

Durch den niedrigen Gehalt an freien Isocyanaten werden die Anforderungen im Bezug auf Arbeitssicherheit und Gesundheitsschutz erfüllt. Die technischen Anwendungseigenschaften der geschäumten Materialien sind im Vergleich zu bekanntem Stand der Technik vergleichbar gut.

Die erfindungsgemäßen schäumbaren Mischungen härten nach dem Ausbringen aus der Aerosoldose mit der umgebenden Luftfeuchtigkeit zu feinzelligen Schäumen aus, so dass die schäumbaren Mischungen zum Dichten, Dämmen und Montieren, z.B. von Fugen, Dachflächen, Fenstern und Türen oder zum Ausfüllen von Hohlräumen geeignet sind.

### Beispiele: (Mengenangabe in Teilen)

Es werden in einem Dreihalskolben 487,5 g eines PPG (OHZ 237) und 56,2 g eines Polyesters aus Adipinsäure, Isophthalsäure/PPG/Diethylenglykol (OHZ 137) gemischt zusammen mit 269 g 2,4'- TDI. Nach Aufheizen auf ca. 80 °C und Rühren war nach 1 Std. ein NCO-Wert von 6,8 % erreicht.
Es wurden weiterhin 57,5 g 4,4'-MDI zugesetzt, zwei Stunden bei 80 °C gerührt. Dann war ein NCO- Endwert von ca. 6,1% erreicht.
NCO:OH (1.Stufe)= 1,5:1
NCO:OH (1.Stufe)= 2,3:1

| | |
|---|---|
| % monomeres TDI: | 0,02 % |
| % monomeres MDI: | 0,8 % |
| NCO-ges: | 6,1 % |

Viskosität 44500 mPas (50 °C)

Zu dem Polymeren werden durch Zugabe einer Mischung von Propan/Dimethylether (1:1), Gew.-Anteil 30 % auf die Gesamtmischung, schäumbare Zusammensetzungen hergestellt. Diese Mischungen werden in einer Einweg-Druckdose eingefüllt. Die Mischungen werden durch Schütteln homogenisiert und für einen Tag gelagert. Es zeigt sich, dass die Mischungen als Schaum gut auszubringen sind. Sie vernetzen schnell.

Es werden weitere Versuche mit Additiven durchgeführt. Diese beeinflussen die Schäumbarkeit nicht wesentlich.
Beispiel 1 + 0,05 % DMDEE als Katalysator
Beispiel 1 + 0,4 % Paraffinöl
Beispiel 1 + 0,2 % UV-Stabilisator
Beispiel 1 + 5% Trichlor-isopropylphosphat

## Patentansprüche

1. Vernetzbare Zusammensetzung mit niedrigem Gehalt an monomeren Isocyanaten enthaltend
a) 0 bis 35 Gew.-% eines Polyesterprepolymeren mit NCO-Gruppen, 99,5 bis 30 Gew.-% eines Polyoxyalkylenprepolymeren mit NCO-Gruppen, wobei die Prepolymeren hergestellt sind aus Polyesterpolyolen und/oder Polyetherpolyolen umgesetzt i) mit einem asymmetrischen aromatischen Diisocyanat zu einem Umsetzungsprodukt enthaltend OH- und NCO-Gruppen, ii) anschließend Umsetzen mit symmetrischen aromatischen Diisocyanaten in einer mindestens äquivalenten Menge zu den vorhandenen OH-Gruppen,
b) 0,5 bis 30 Gew-% Additive, wobei die Gesamtheit dieser Bestandteile 100 Gew.-% beträgt,
wobei die Polyole eine Molmasse, ausgedrückt als zahlenmittlere Molmasse, M_{N}, gemessen durch GPC, unter 5000 g/mol aufweisen, und das Prepolymer a) einen Gehalt an monomeren asymmetrischen Diisocyanaten (A) unter 0,1 Gew-% und an monomeren symmetrischen Diisocyanaten (S) unter 2 Gew.-% aufweist, **dadurch gekennzeichnet, dass** die Zusammensetzung mindestens c) ein Treibmittel enthält in einer Menge, dass die Zusammensetzung aufschäumen kann, wobei das Treibmittel mindestens ein polares Treibmittel ausgewählt aus Dimethylether (DME) und/oder Dimethoxymethan enthält, und wobei die Menge des asymmetrischen Diisocyanats (A) so gewählt wird, dass ein NCO (A):OH-Verhältnis von 0,5:1 bis 2:1 eingesetzt wird und wobei als symmetrisches Diisocyanat (S) 4,4'-MDI zugesetzt wird, wobei die Menge an 4,4'-MDI so gewählt ist, dass ein NCO(S):OH (frei)-Verhältnis von 1:1 bis 2,7:1 erreicht wird, und wobei Viskosität der Mischung der Bestandteile a und b zwischen 10000 bis 150000 mPas bei 50°C beträgt, gemessen nach Brookfield, EN ISO 2555.

2. Zusammensetzung nach Anspruch 1, **dadurch gekennzeichnet, dass** die Mischung der Polyole 50 bis 100 Gew.-% lineare Polyetherdiole mit einer Molmasse unter 2000 g/mol aufweist

3. Zusammensetzung nach einem der vorhergehenden Ansprüche, **dadurch gekennzeichnet, dass** als Additive Weichmacher, Schaumstabilisatoren, Katalysatoren, Flammschutzmittel, Farbstoffe oder Pigmente, Zellöffner und/oder UV-Stabilisatoren enthalten sind.

4. Zusammensetzung nach einem der vorhergehenden Ansprüche, **dadurch gekennzeichnet, dass** keine Weichmacher enthalten sind.

5. Zusammensetzung nach einem der vorhergehenden Ansprüche, **dadurch gekennzeichnet, dass** bezogen auf die gesamte schäumbare Zusammensetzung 5 bis 40 Gew.-% Treibmittel enthalten sind.

6. Einweg-Druckbehälter enthaltend eine Zusammensetzung nach einem der Ansprüche 1 bis 5.

7. Verfahren zum Herstellen einer schäumbaren vernetzbaren Zusammensetzung nach einem der Ansprüche 1 bis 5, wobei das Prepolymer aus mindestens einem Polyetherpolyol und TDI im NCO/OH-Verhältnis von 0,5:1 bis 2:1 hergestellt wird, das entstehende Umsetzungsprodukt noch OH-Gruppen aufweist, dieses Umsetzungsprodukt mit 4,4'-MDI im Äquivalentverhältnis NCO (Isocyanat S) zu vorhandenen OH-Gruppen von 1:1 bis 2,7:1 umgesetzt wird und das Prepolymer zusammen mit weiteren Bestandteilen in ein Einweggebinde gefüllt wird.

8. Verfahren nach Anspruch 7, **dadurch gekennzeichnet, dass** eine Mischung aus Polyetherpolyolen und Polyesterpolyolen eingesetzt wird.

9. Verfahren nach Anspruch 7 oder 8, **dadurch gekennzeichnet, dass** das Prepolymer zusammen mit mindestens einem Teil des Treibmittels in eine Dose eingebracht wird.

10. Verwendung einer Zusammensetzung nach Anspruch 1 bis 5 zur Herstellung von vernetzbaren Dosenschäumen.

## Claims

1. A crosslinkable composition having a low content of monomeric isocyanates, containing
a) 0 to 35 wt.% of a polyester prepolymer comprising NCO groups, 99.5 to 30 wt.% of a polyoxyalkylene prepolymer comprising NCO groups, the prepolymers being produced from polyester polyols and/or polyether polyols reacted i) with an asymmetric aromatic diisocyanate to form a reaction product containing OH and NCO groups, and ii) subsequent reaction with symmetrical aromatic diisocyanates in an amount at least equivalent to that of the OH groups present,
b) 0.5 to 30 wt.% of additives, the total of these components being 100 wt.%, the polyols having a molar mass, expressed as a number-average molar mass, MN, measured by GPC, of less than 5,000 g/mol, and prepolymer a) having a content of monomeric asymmetric diisocyanates (A) of less than 0.1 wt.% and a content of monomeric symmetrical diisocyanates (S) of less than 2 wt.%, **characterized in that** the composition contains
c) at least one blowing agent in an amount capable of foaming the composition, the blowing agent containing at least one polar blowing agent selected from dimethyl ether (DME) and/or dimethoxymethane, and the amount of the asymmetric diisocyanate (A) being selected such that an NCO(A):OH ratio of 0.5:1 to 2:1 is used, and 4,4'-MDI being added as the symmetrical diisocyanate (S), the amount of 4,4'-MDI being selected such that an NCO(S):OH (free) ratio of 1:1 to 2.7:1 is achieved, and the viscosity of the mixture of components a and b being between 10,000 and 150,000 mPas at 50 °C, measured according to Brookfield, EN ISO 2555.

2. The composition according to claim 1, **characterized in that** the mixture of the polyols has 50 to 100 wt.% of linear polyether diols having a molar mass of less than 2,000 g/mol.

3. The composition according to one of the preceding claims, **characterized in that** plasticizers, foam stabilizers, catalysts, flame retardants, dyes or pigments, cell openers and/or UV stabilizers are contained as additives.

4. The composition according to one of the preceding claims, **characterized in that** no plasticizers are contained.

5. The composition according to one of the preceding claims, **characterized in that** the blowing agent is contained in an amount of 5 to 40 wt.%, based on the total foamable composition.

6. A disposable pressurized container containing a composition according to one of claims 1 to 5.

7. A method for producing a foamable crosslinkable composition according to one of claims 1 to 5, wherein the prepolymer is produced from at least one polyether polyol and TDI in an NCO/OH ratio of 0.5:1 to 2:1, the resulting reaction product still comprises OH groups, said reaction product is reacted with 4,4'-MDI in an equivalent ratio NCO (isocyanate S) to OH groups present of 1:1 to 2.7:1, and the prepolymer is filled into a disposable container together with other components.

8. The method according to claim 7, **characterized in that** a mixture of polyether polyols and polyester polyols is used.

9. The method according to claim 7 or 8, **characterized in that** the prepolymer is introduced into a can together with at least some of the blowing agent.

10. The use of a composition according to claims 1 to 5 for producing crosslinkable canned foams.

## Revendications

1. Composition réticulable à faible teneur en isocyanates monomères contenant
a.) 0 à 35 % en poids d'un prépolymère de polyester comprenant des groupes NCO, 99,5 à 30 % en poids d'un prépolymère de polyoxyalkylène comprenant des groupes NCO, les prépolymères étant produits à partir de polyesterpolyols et/ou de polyétherpolyols mis en réaction i) avec un diisocyanate aromatique asymétrique afin d'obtenir un produit de réaction contenant des groupes OH et NCO, ii) puis mis en réaction avec des diisocyanates aromatiques symétriques dans une quantité au moins équivalente aux groupes OH présents,
b) 0,5 à 30 % en poids d'additifs, le total de ces constituants étant de 100 % en poids, les polyols ayant une masse molaire, exprimée en masse molaire moyenne en nombre, M_{N}, mesurée par GPC, inférieure à 5 000 g/mol, et le prépolymère présentant
a) une teneur en diisocyanates asymétriques monomères (A) inférieure à 0,1 % en poids et en diisocyanates symétriques monomères (S) inférieure à 2 % en poids, **caractérisée en ce que** la composition contient au moins
c) un agent d'expansion en une quantité permettant de faire mousser la composition, l'agent d'expansion contenant au moins un agent d'expansion polaire choisi parmi le diméthyléther (DME) et/ou le diméthoxyméthane, et
la quantité du diisocyanate asymétrique (A) étant choisie de telle sorte qu'un rapport NCO (A):OH de 0,5:1 à 2:1 est utilisé, et du 4,4'-MDI étant ajouté comme diisocyanate symétrique (S), la quantité de 4,4'-MDI étant choisie de telle sorte qu'un rapport NCO (S):OH (libre) de 1:1 à 2,7:1 est atteint, et la viscosité du mélange des constituants a et b étant comprise entre 10 000 et 150 000 mPas à 50 °C, mesurée selon Brookfield, EN ISO 2555.

2. Composition selon la revendication 1, **caractérisée en ce que** le mélange des polyols présente 50 à 100 % en poids de polyétherdiols linéaires ayant une masse molaire inférieure à 2 000 g/mol.

3. Composition selon l'une des revendications précédentes, **caractérisée en ce qu'**elle contient, comme additifs, des plastifiants, des stabilisateurs de mousse, des catalyseurs, des retardateurs de flamme, des colorants ou des pigments, des agents d'ouverture de cellules et/ou des stabilisateurs UV.

4. Composition selon l'une des revendications précédentes, **caractérisée en ce qu'**elle ne contient pas de plastifiants.

5. Composition selon l'une des revendications précédentes, **caractérisée en ce qu'**elle contient 5 à 40 % en poids de l'agent d'expansion par rapport à la composition moussante entière.

6. Récipient sous pression jetable contenant une composition selon l'une des revendications 1 à 5.

7. Procédé de production d'une composition réticulable moussante selon l'une des revendications 1 à 5, le prépolymère étant produit à partir d'au moins un polyétherpolyol et de TDI dans un rapport NCO/OH de 0,5:1 à 2:1, le produit de réaction résultant présentant toujours des groupes OH, ce produit de réaction étant mis en réaction avec du 4,4'-MDI dans le rapport équivalent de NCO (isocyanate S) aux groupes OH existants de 1:1 à 2,7:1, et le prépolymère étant introduit dans un contenant jetable conjointement avec d'autres constituants.

8. Procédé selon la revendication 7, **caractérisé en ce qu'**un mélange de polyétherpolyols et de polyesterpolyols est utilisé.

9. Procédé selon la revendication 7 ou 8, **caractérisé en ce que** le prépolymère est introduit dans une bombe conjointement avec au moins une partie de l'agent d'expansion.

10. Utilisation d'une composition selon les revendications 1 à 5 pour la production de mousses en bombe réticulables.
